# EUROPEAN PATENT APPLICATION

(11) **EP 4 826 527 A1**
(43) Date of publication of application: **21.10.2026**
(21) Application number: 24917701.5
(22) Date of filing: 17.01.2024
(51) Int. Cl.: G06F 9/445

(54) **METHOD AND APPARATUS FOR PARALLEL DEPLOYMENT OF MULTIPLE SERVICES, ELECTRONIC DEVICE AND STORAGE MEDIUM**

(71) Applicant: Siemens Aktiengesellschaft, 80333 München (DE)
(72) Inventor: YU, He, Wuxi, Jiangsu 214028 (CN); WANG, Qi, Wuhan, Hubei 430075 (CN); LIU, Zhanhong, Wuxi, Jiangsu 214142 (CN); YANG, Shaopeng, Wuxi, Jiangsu 214000 (CN)
(74) Representative: Isarpatent
(86) International application number: PCT/CN2024/072823
(87) International publication number: WO 2025/152075

(57) **Abstract**

The present disclosure relates to a method and apparatus for parallel deployment of multiple services, an electronic device, and a storage medium. A method for parallel deployment of multiple services on an edge device includes: setting a configuration file of the edge device in a format of a preset configuration template, the configuration file including related information of the edge device, related information of services to be deployed in parallel on the edge device, and information of an event for triggering service replacement; parsing the configuration file; based on the deployment information obtained by parsing, creating a space for deploying a service, a data input channel, and a data transmission channel, to deploy on the edge device multiple services running in parallel; and monitoring the multiple services running in parallel.

## Description

### TECHNICAL FIELD

The present disclosure generally relates to the technical field of edge devices, and more specifically, to a method and apparatus for parallel deployment of multiple services, an electronic device, and a storage medium.

### BACKGROUND

With increasing emphasis on edge management, in recent years, many companies launch edge management frameworks, and some small and medium enterprises choose open-source framework solutions. These products and frameworks can help us manage deployment of edge devices, data, and algorithm models. However, a solution in which a plurality of models/applications are deployed in parallel has the following problems:
1. Parallel configuration is difficult and limited by device performance. Based on an existing framework and management mode, one model corresponds to one container unit, and a parallel configuration may cause disorder of modules and a task list, and limit performance of an edge device.
2. Increased resource and bandwidth overheads. An objective of parallel deployment is to select a better edge policy, but the parallel deployment actually causes more bandwidth consumption. How to reduce costs while ensuring implementation of an objective is a problem.

Currently, there is no convenient framework to support a parallel mode. In some cases, a distributed training mode may be constructed by using a distributed cluster environment, but the distributed training mode consumes a large quantity of resources.

A common remediation solution is to open multiple deployment containers based on an existing edge management framework, and also needs to consider performance support of an edge device, so that each module is relatively independent. In addition, a maintenance engineer further needs to perform manual operations and maintenance by using instructions.

### SUMMARY

A brief overview of the present invention is provided below in order to provide a basic understanding about some aspects of the present invention. It should be understood that this overview is not an exhaustive overview of the present invention. This overview is not intended to determine a key or an important part of the present invention, nor is it intended to limit the scope of the present invention. The purpose of this overview is merely to provide certain concepts in a simplified form, with the certain concepts serving as a prelude to a more detailed description that will be discussed later.

In view of this, the present disclosure provides, for an edge device on an edge side, a method for parallel deployment of multiple services on the edge device.

According to an aspect of the present disclosure, provided is a method for parallel deployment of multiple services on an edge device, including:
setting a configuration file of the edge device in a format of a preset configuration template, the configuration file including related information of the edge device, related information of services to be deployed in parallel on the edge device, and information of an event for triggering service replacement;
parsing the configuration file;
based on the deployment information obtained by parsing, creating a space for deploying a service, a data input channel, and a data transmission channel, to deploy on the edge device multiple services running in parallel; and
monitoring the multiple services running in parallel.

In such a manner, an extensible parallel configuration channel may be provided for multiple services, an edge device may download a corresponding package and enable running environments to be consistent, so that construction of a complex container node and a transmission data space may be avoided, thereby saving resources.

Alternatively, in an example of the foregoing aspect, the method further includes: determining, according to data obtained through monitoring, whether a preset replacement condition is satisfied, and if yes, deleting a space in which a related service is deployed.

In this manner, it may be selected that a service that is more effective is kept and a service that is relatively low efficient is deleted.

Alternatively, in an example of the foregoing aspect, the deployment information includes: system mirror requirements, package requirements, a link relationship, variables and attributes thereof, replacement rules, and events.

Alternatively, in an example of the foregoing aspect, the deploying on the edge device multiple services running in parallel includes:
determining whether the system mirror requirements are the same, if the system mirror requirements are the same, combining the same system mirror requirements and creating, based on the system mirror requirements, the space for deploying the service, or if the system mirror requirements are different, creating spaces for different system mirror requirements respectively for deploying the service;
determining whether the package requirements are the same, if the package requirements are the same, combining the same package requirements and creating a package download channel, or if the package requirements are different, creating package download channels for different package requirements respectively; and
determining whether a parallel relationship is set, if yes, combining input variables, checking an output variable, creating a data subscription channel, and setting a shared period of time, or if not, combining an input variable and an output variable having a same attribute, and then creating a data subscription channel.

In this manner, a parallel running mode is constructed based on parsing of the configuration file, and running resources and data training units can be saved by using a unified input data channel and transmission data channel.

Alternatively, in an example of the foregoing aspect, the preset replacement condition includes at least one of the following: a time-based replacement event, a value-based replacement event, a comparison result-based replacement event, or the like.

According to another aspect of the present disclosure, provided is an apparatus for parallel deployment of multiple services on an edge device, including:
a configuration file setting unit, configured to set a configuration file of the edge device in a format of a preset configuration template, the configuration file including related information of the edge device, related information of services to be deployed in parallel on the edge device, and information of an event for triggering service replacement;
a configuration file parsing unit, configured to parse the configuration file;
a service deployment unit, configured to: based on the deployment information obtained by parsing, create a space for deploying a service, a data input channel, and a data transmission channel, to deploy on the edge device multiple services running in parallel; and
a monitoring unit, configured to monitor the multiple services running in parallel. In this manner, resource allocation and application program execution may be performed on each distributed device, and a performance indicator of each application program may further be collected as a reference for adjusting a configuration parameter.

According to another aspect of the present disclosure, provided is an electronic device is provided, including: at least one processor; and a memory coupled to the at least one processor, where the memory is configured to store an instruction, and when the instruction is executed by the at least one processor, the processor is enabled to perform the foregoing method.

According to another aspect of the present disclosure, a non-transitory machine-readable storage medium storing executable instructions that, when executed, cause the machine to perform the method as described above.

According to another aspect of the present disclosure, a computer program product is provided, tangibly stored on a computer-readable medium and including computer-executable instructions that, when executed, cause at least one processor to execute the method as described above.

### BRIEF DESCRIPTION OF THE DRAWINGS

The foregoing and other objectives, characteristics, and advantages of the present invention will be more easily understood with reference to the following descriptions of embodiments of the present invention in conjunction with the accompanying drawings. The components in the accompanying drawings are merely used for illustrating the principles of the present invention. In the drawings, same or similar technical features or components are represented by using same or similar reference numerals. In the drawings,
FIG. 1 is a schematic architectural diagram of an edge system;
FIG. 2 is a flowchart of an exemplary process of a method for parallel deployment of multiple services in on an edge device according to an embodiment of the present disclosure;
FIG. 3 is a block diagram of an exemplary configuration of an apparatus for parallel deployment of multiple services on an edge device according to another embodiment of the present disclosure; and
FIG. 4 is a block diagram of an electronic device according to an exemplary embodiment of the present disclosure.

Description of reference numerals:

| | | | |
|---|---|---|---|
| 10: | edge system | 102: | server or cloud platform |
| 104-1, 104-2, ... 104-n: | edge device | 106-1, 106-2: | model |
| 108-1, 108-2, and 108-3: | application | 200: | method for parallel deployment of multiple services on an edge device |
| S202, S204, S206, S208, and S210: | step | 300: | apparatus for parallel deployment of multiple services on an edge device |
| 302: | configuration file setting unit | 304: | configuration file parsing unit |
| 306: | service deployment unit | 308: | monitoring unit |
| 310: | service deletion unit | 400: | electronic device |
| 402: | processor | 404: | memory |

### DETAILED DESCRIPTION

A subject described in this specification will now be discussed with reference to exemplary implementations. It is to be understood that, discussion of the embodiments is merely intended to make a person skilled in the art better understand and implement the subject described in this specification, and is not intended to limit the protection scope of the claims, the applicability, or examples. The functions and arrangements of the discussed elements can be changed without departing from the protection scope of the content of the present disclosure. Various processes or components may be omitted, replaced, or added in the various examples according to needs. For example, the described method may be executed according to a sequence different from the sequence described herein, and steps may be added, omitted, or combined. In addition, features described with respect to some examples may also be combined in another example.

As used in this specification, a term "include" and its variants represent open terms, and mean "including but not limited to". The term "based on" means "based at least partially on". Terms "one embodiment" and "an embodiment" mean "at least one embodiment". A term "another embodiment" means "at least one other embodiment". The terms "first", "second", and the like may refer to different or same objects. Other definitions may be included explicitly or implicitly in the following. Unless otherwise clearly specified in the context, a definition of a term is consistent throughout the specification.

Currently, an actual application scenario in which a plurality of models/application programs are deployed in parallel may include the following requirements:
At a design stage, emulation software usually runs and tests by using a single model (including complex parameters). If a plurality of models can be run in parallel and compared, this helps reduce time and workload.

At an on-site debugging stage, plurality of models/applications may be run in parallel at an edge, and an optimal model/application is selected after validities of the models/applications are verified.

In a maintenance or upgrade process, a plurality of applications may be run in parallel, and after performance is confirmed, an application having a good performance is selected for performing seamless replacement.

According to the technical solution of the present disclosure, for an edge device on an edge side, provided is a method for parallel deployment of multiple services on the edge device.

The services described herein may include algorithms, models, application programs, and the like deployed on the edge device. The "service" mentioned in this specification may refer to any one of the algorithms, the models, the application programs, and the like, and is not limited thereto.

The method and apparatus for parallel deployment of multiple services on an edge device according to the embodiments of the present disclosure are described below with reference to the accompanying drawings.

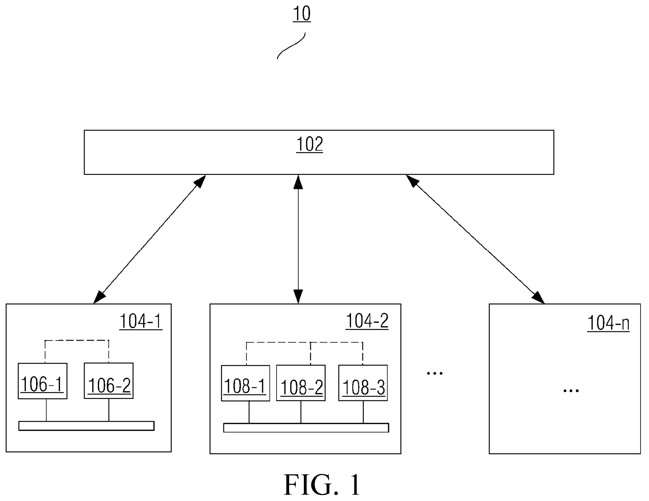

FIG. 1 is a schematic architectural diagram of an edge system 10. The edge system includes a server or a cloud platform 102 and a plurality of edge devices 104-1, 104-2, ... 104-n. Two models 106-1 and 106-2 running in parallel are deployed on the edge device 104-1, and three applications 108-1, 108-2, and 108-3 running in parallel are deployed on the edge device 104-2.

A user may deploy a plurality of models, application programs, algorithms, or the like in parallel on an edge device according to requirements.

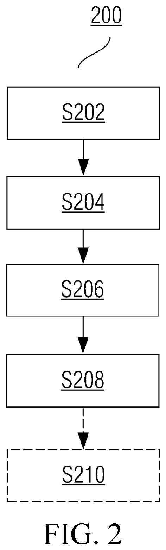

FIG. 2 is a flowchart of an exemplary process of a method 200 for parallel deployment of multiple services in on an edge device according to an embodiment of the present disclosure. The method specifically includes:
First, in step S202: Set a configuration file of an edge device according to a format of a preset configuration template.

In this embodiment of the present disclosure, a standard template of the configuration file of the edge device is preset, and the configuration file of the edge device is set according to a format of the template.

The template of the configuration file may include related information of the edge device, related information of services to be deployed in parallel on the edge device, and information of an event for triggering service replacement.

In a specific embodiment, the template of the configuration file may include the following information.

The related information of the edge device includes information such as a device name, a device address, and a system mirror.

The system mirror refers to a running environment of the edge device, for example, may be a running environment such as Window or Linux. The system mirror may specifically include: information such as a mirror name, a mirror version, a mirror file, and a resource description.

The related information of the services to be deployed on the edge device in parallel may specifically include a corresponding instance set for an application or algorithm to be deployed. Each instance specifically includes: an instance name, a package, a link relationship, and a monitoring rule.

The package is a program of a service, and may include a program name, a package file, and data parameters (input parameters, output parameters, and the like).

The link relationship includes information such as an algorithm/program instance having a link relationship, a parallel period of time, a link status, and unbinding of a link.

The rule is a rule used when each service is monitored, and may include information such as a heartbeat alarm, a monitoring value alarm, and regression comparison.

Service replacement refers to deleting one of the services running in parallel when a preset event is satisfied. The event for triggering service replacement may include a replacement event and a comparison event. For example, the replacement event includes rules such as setting a replacement time and setting a parameter threshold for replacement. The comparison event includes setting a comparison parameter, setting a comparison period of time, performance comparison, and the like. The event for triggering service replacement is specifically described below.

It may be understood that, information included in the template of the configuration file may be set according to a user requirement, and may be reduced or further extended, and is not limited to the specific information described above.

By defining such the template of the configuration file, a user may conveniently set a plurality of parallel services on an edge device, and a service not satisfying a requirement may be automatically replaced, thereby helping the user to manage a plurality of edge devices.

The configuration file may be set on the edge device, or may be a configuration file that meets a format of a configuration template and that is received from a server or a cloud platform. This is not described in detail in the present disclosure.

Next, in step S204: Parse the configuration file.

Particularly, deployment information extracted by parsing the configuration file may include, for example, information such as system mirror requirements, package requirements, a link relationship, variables and attributes thereof, replacement rules, and events.

Next, in step S208: Based on the deployment information obtained by parsing, create a space (or node) for deploying a service, a data input channel, and a data transmission channel, to deploy on one edge device multiple services running in parallel.

Particularly, first, whether the system mirror requirements are the same is determined. If the system mirror requirements are the same, the same system mirror requirement is combined, and a space for deploying a service is created based on the system mirror requirement. If the system mirror requirements are different, spaces for deploying a service are created for different system mirror requirements respectively.

Next, whether the package requirements are the same is determined, if the package requirements are the same, the same package requirements are combined and a package download channel is created, or if the package requirements are different, creating package download channels for different package requirements respectively; and
whether a parallel relationship is set is determined, if yes, input variables are combined, an output variable is checked, a data subscription channel is created, and a shared period of time is set, or if not, an input variable and an output variable having a same attribute are combined, and then a data subscription channel is created.

Through the foregoing operations, the multiple services running in parallel may be deployed on one edge device.

The multiple services running in parallel may share an input end to collect physical data. On an output end of a data channel, a same data source may be sent to a plurality of parallel instances by adding a shared target parallel instance.

In this process, the same resource requirements are combined, so that resources can be saved, and services running in parallel can be compared.

Next, in step S208: Monitor the multiple services running in parallel.

The multiple services may run in parallel on the edge device. When a predetermined condition is satisfied, one or more of the services are deleted. Therefore, the multiple services are monitored. Particularly, for example, the multiple services may be monitored according to a preset rule, event, performance, or the like.

In an example, the method 200 may further include step S210: Determine, according to data obtained through monitoring, whether a preset replacement condition is satisfied, and if yes, delete a space (or node) in which a related service is deployed.

The preset replacement condition may include a time-based replacement event, a value-based replacement event, a comparison result-based replacement event, and the like.

The time-based replacement event includes, for example, how long a service deployment time reaches, a replacement moment is set, or the like. The value-based replacement event includes, for example, a score obtained through algorithm training, and an input/output value reaching a preset value.

The comparison result-based replacement event may include:
a comparison parameter, for example, a comparison result of output values of various services exceeds a particular threshold;
a comparison period of time, where different periods of time are set to check comparison between different time windows, so that a determining conclusion may be obtained based on not only a single comparison result; and
performance comparison, for example, setting a replacement event based on performance comparison and edge resource consumption.

A person skilled in the art may set a suitable replacement event as required, and when it is detected that a replacement event is satisfied, a space in which a related service is deployed may be deleted. The related service refers to a service related to the replacement event.

For example, based on a replacement event of a comparison result, performance comparison is performed on a service A and a service B. If it is determined that performance of the service A is better than that of the service B, a space in which the service B is deployed is deleted. The service B herein is the related service.

According to the method of the present disclosure, parallel deployment of multiple services is supported, and a link relationship among the services is established, thereby helping a user conveniently compare the services.

According to the method of the present disclosure, an extensible parallel configuration channel may be provided for multiple services, an edge device may download a corresponding package and enable running environments to be consistent, so that construction of a complex container node and a transmission data space may be avoided, thereby saving resources.

According to the method of the present disclosure, a parallel running mode is constructed based on parsing of a configuration file, and parallel units are simultaneously monitored. Running resources and data training units can be saved by using a unified input data channel and transmission data channel.

In addition, according to the method of the present disclosure, data storage and data communication may also be supported, and data storage may support offline or tracking comparison requirements.

According to the method of the present disclosure, according to comparison of the multiple services running in parallel, it may be selected that a service that is more effective is kept and a service that is relatively low efficient is deleted.

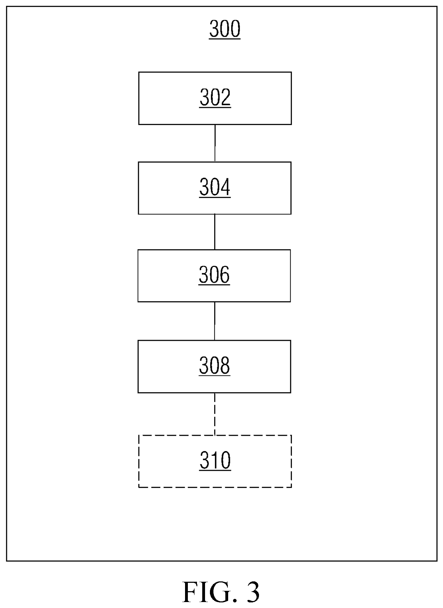

FIG. 3 is a block diagram of an exemplary configuration of an apparatus 300 for parallel deployment of multiple services on an edge device according to another embodiment of the present disclosure. The apparatus 300 is configured to perform the method for parallel deployment of multiple services on an edge device shown in FIG. 2. The apparatus 300 may be disposed on each edge device.

The apparatus 300 for parallel deployment of multiple services on the edge device shown in FIG. 3 includes a configuration file setting unit 302, a configuration file parsing unit 304, a service deployment unit 306, and a monitoring unit 308.

The configuration file setting unit 302 is configured to set a configuration file of the edge device in a format of a preset configuration template, the configuration file including related information of the edge device, related information of services to be deployed in parallel on the edge device, and information of an event for triggering service replacement.

The configuration file parsing unit 304 is configured to parse the configuration file.

The service deployment unit 306 is configured to: based on the deployment information obtained by parsing, create a space for deploying a service, a data input channel, and a data transmission channel, to deploy on the edge device multiple services running in parallel.

The monitoring unit 308 is configured to monitor the multiple services running in parallel.

In an example, the apparatus 300 for parallel deployment of multiple services on an edge device further includes: a service deletion unit 310, configured to determine, according to data obtained through monitoring, whether a preset replacement condition is satisfied, and if yes, delete a space in which a related service is deployed.

Details of operations and functions of the parts of the apparatus 300 for parallel deployment of multiple services on an edge device may be, for example, the same as or similar to the relevant parts of the embodiments of the method for parallel deployment of multiple services on an edge device of the present disclosure described with reference to FIG. 1 to FIG. 2, and are not described in detail herein again.

It needs to be noted that structures of the apparatus for parallel deployment of multiple services on an edge device 300 and composition units thereof shown in FIG. 3 are merely exemplary. A person skilled in the art may modify the structural block diagram shown in FIG. 3 as required.

The method and apparatus according to the embodiments of the present disclosure are described with reference to FIG. 1 to FIG. 3 above. Units of the foregoing apparatus for parallel deployment of multiple services on an edge device may be implemented by using hardware, or may be implemented by using software, or a combination of hardware and software.

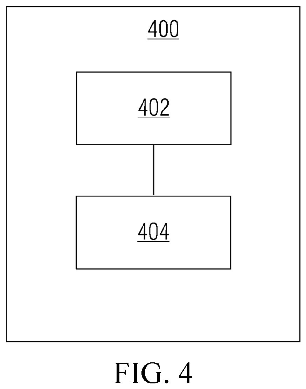

FIG. 4 is a block diagram of an electronic device 400 according to an exemplary embodiment of the present disclosure. According to an embodiment, the electronic device 400 may include at least one processor 402 that executes at least one computer-readable instruction stored or encoded in a computer-readable storage medium (i.e., a memory 404).

It should be understood that when the computer-executable instruction stored in the memory 404 is executed, the at least one processor 402 is enabled to perform various operations and functions described above with reference to FIG. 1 to FIG. 3 in the embodiments of the present disclosure.

According to an embodiment, a non-transitory machine-readable medium is provided. The non-transitory machine-readable medium may be provided with machine-readable instructions. The instructions, when executed by a machine, cause the machine to perform the various operations and functions described in the foregoing embodiments of the present disclosure with reference to FIG. 1 to FIG. 3.

According to an embodiment, a computer program is provided, including a computer-executable instruction that, when executed, causes at least one processor to perform the foregoing operations and functions described with reference to FIG. 1 to FIG. 3 in the embodiments of the present disclosure.

According to an embodiment, a computer program product is provided, including a computer-executable instruction that, when executed, causes at least one processor to perform the foregoing operations and functions described with reference to FIG. 1 to FIG. 3 in the embodiments of the present disclosure.

It should be understood that embodiments of this specification are described in a progressive manner, and for the same and similar parts of embodiments, references may be made to each other. Each embodiment focuses on a difference from other embodiments. For example, the foregoing embodiments related to the apparatus, embodiments related to the electronic device, and embodiments related to the machine-readable storage medium are substantially similar to the method embodiments and therefore are only briefly described, and reference can be made to the portion of the description of the method embodiment for relevant parts.

The foregoing describes specific embodiments of this specification. Other embodiments fall within a scope of the appended claims. In some implementations, the actions or steps recited in the claims may be performed in an order different from that described in the embodiments while still achieving the desired results. In addition, the processes depicted in the accompanying drawings are not necessarily performed in a specific order or sequential order to achieve the desired results. In some implementations, multitasking and parallel processing are also possible or may be advantageous.

Not all steps and units in the procedures and the diagrams of the system structures are necessary, and some steps or units may be omitted according to an actual requirement. The apparatus structure described in the embodiments may be a physical structure or a logical structure. That is, some units may be implemented by the same physical entity, or some units may be implemented by a plurality of physical entities, or may be implemented by some components in a plurality of independent devices together.

Exemplary embodiments are described above in combination with specific implementations illustrated in the accompanying drawings, but this does not represent all embodiments that may be implemented or fall within the protection scope of the claims. A term "exemplary" used in the entire specification means "used as an example, an instance, or an illustration", and does not mean "preferred" or "superior" over other embodiments. To provide an understanding of the described technologies, the specific implementations include specific details. However, these technologies may be implemented without these specific details. In some embodiments, to avoid confusing the concept of the described embodiments, a well-known structure and apparatus are shown in a block diagram form.

The descriptions of the content of the present disclosure are provided to allow any person of ordinary skill in the art to implement or use the content of the present disclosure. Various modifications to the content of the present disclosure will be obvious to those skilled in the art. In addition, a general principle defined herein can be applied to other variants without departing from the protection scope of the content of the present disclosure. Therefore, the content of the present disclosure is not limited to the examples and designs described in this specification, but is consistent with the widest range conforming to the principle and novelty disclosed in this specification.

Described above are merely exemplary embodiments of the present invention, and are not intended to limit the present invention. Within the spirit and principles of the present invention, any modifications, equivalent replacements, improvements, and the like shall fall within the scope of protection of the present invention.

The nouns and pronouns related to persons in this patent application are not limited to a specific gender.

## Claims

1. A method (200) for parallel deployment of multiple services on an edge device, comprising
setting a configuration file of the edge device in a format of a preset configuration template, the configuration file comprising related information of the edge device, related information of services to be deployed in parallel on the edge device, and information of an event for triggering service replacement (S202);
parsing the configuration file (S204);
based on the deployment information obtained by parsing, creating a space for deploying a service, a data input channel, and a data transmission channel, to deploy on the edge device multiple services running in parallel (S206); and
monitoring the multiple services running in parallel (S208).

2. The method (200) according to claim 1, further comprising:
determining, according to data obtained through monitoring, whether a preset replacement condition is satisfied, and if yes, deleting a space in which a related service is deployed (S210).

3. The method (200) according to claim 1, wherein the deployment information comprises: system mirror requirements, package requirements, a link relationship, variables and attributes thereof, replacement rules, and events.

4. The method (200) according to claim 3, wherein the deploying on the edge device multiple services running in parallel comprises:
determining whether the system mirror requirements are the same, if the system mirror requirements are the same, combining the same system mirror requirements and creating, based on the system mirror requirements, the space for deploying the service, or if the system mirror requirements are different, creating spaces for different system mirror requirements respectively for deploying the service;
determining whether the package requirements are the same, if the package requirements are the same, combining the same package requirements and creating a package download channel, or if the package requirements are different, creating package download channels for different package requirements respectively; and
determining whether a parallel relationship is set, if yes, combining input variables, checking an output variable, creating a data subscription channel, and setting a shared period of time, or if not, combining an input variable and an output variable having a same attribute, and then creating a data subscription channel.

5. The method (200) according to claim 3, wherein the preset replacement condition comprises at least one of the following: a time-based replacement event, a value-based replacement event, a comparison result-based replacement event, or the like.

6. An apparatus (300) for parallel deployment of multiple services on an edge device, comprising:
a configuration file setting unit (302), configured to set a configuration file of the edge device in a format of a preset configuration template, the configuration file comprising related information of the edge device, related information of services to be deployed in parallel on the edge device, and information of an event for triggering service replacement;
a configuration file parsing unit (304), configured to parse the configuration file;
a service deployment unit (306), configured to: based on the deployment information obtained by parsing, create a space for deploying a service, a data input channel, and a data transmission channel, to deploy on the edge device multiple services running in parallel; and
a monitoring unit (308), configured to monitor the multiple services running in parallel.

7. The apparatus (300) according to claim 6, further comprising:
a service deletion unit (310), configured to determine, according to data obtained through monitoring, whether a preset replacement condition is satisfied, and if yes, delete a space in which a related service is deployed.

8. An electronic device (400), comprising:
at least one processor (402); and
a memory (404) coupled to the at least one processor (402), the memory being configured to store instructions, the instructions, when executed by the at least one processor (402), causing the processor (402) to perform the method according to any one of claims 1 to 5.

9. A non-transitory machine-readable storage medium, storing executable instructions, the instructions, when executed, causing the machine to perform the method according to any one of claims 1 to 5.

10. A computer program product, computer program product being tangibly stored on a computer-readable medium and comprising computer-executable instructions that, when executed, cause at least one processor to perform the method according to any one of claims 1 to 5.
